# EUROPÄISCHE PATENTSCHRIFT

(11) **EP 3 714 999 B1**
(45) Veröffentlichungstag und Bekanntmachung des Hinweises auf die Patenterteilung: **28.09.2022**
(21) Anmeldenummer: 19165689.1
(22) Anmeldetag: 28.03.2019
(51) Int. Cl.: C21D 11/00

(54) **ERMITTLUNG EINER ANSTELLUNG EINES WALZGERÜSTS**
DETERMINATION OF THE ADJUSTMENT OF A ROLL STAND
DÉTERMINATION DE LA NOMINATION D'UN ROULEAU

(43) Veröffentlichungstag der Anmeldung: 30.09.2020
(73) Patentinhaber: Primetals Technologies Germany GmbH, 91058 Erlangen (DE)
(72) Erfinder: Loehe, Klaus, 90768 Fürth (DE); Kurz, Matthias, 91052 Erlangen (DE)
(74) Vertreter: Metals@Linz

(56) Entgegenhaltungen:
- EP-A1- 0 584 605
- EP-A1- 0 919 296
- WO-A1-2012/159849
- DE-A1-102004 041 328
- US-A- 5 511 303

## Beschreibung

### Gebiet der Technik

Die vorliegende Erfindung betrifft für ein Walzgerüst, dem eine Bramme zum Walzen zugeführt wird, die Ermittlung einer Anstellung des Walzgerüsts.

### Stand der Technik

Brammen werden in Walzgerüsten warmgewalzt. Beim Auslaufen der jeweiligen Bramme aus dem Walzgerüst kann es zu einer Säbelbildung oder einer Hakenbildung kommen. Ein Säbel oder ein Haken treten auf, wenn die Bramme in dem Walzgerüst auf ihrer einen Seite stärker gewalzt wird als auf ihrer anderen Seite.

Sowohl ein Säbel als auch ein Haken sind von Nachteil und sollten daher nach Möglichkeit vermieden werden. Sind die Gründe bekannt, aufgrund derer ein Säbel bzw. ein Haken auftritt, kann durch Korrektur der Anstellung des Walzgerüsts - insbesondere durch eine asymmetrische Einstellung des Walzspaltes - die Säbel- bzw. Hakenbildung unterdrückt bzw. zumindest positiv beeinflusst werden (in der Regel reduziert werden).

Eine Säbel- bzw. Hakenbildung kann bereits beim ersten Walzstich der Bramme auftreten, d.h. dem ersten Walzstich, dem die Bramme nach dem Verlassen eines die Bramme auf Walztemperatur aufheizenden Ofens unterworfen wird.

Aus der WO 2012/159 849 A1 ist bekannt, dass insbesondere ein Temperaturkeil Einfluss auf die Säbel- bzw. Hakenbildung hat. Auch ist erwähnt, dass eine asymmetrische Anstellung eines Walzgerüsts in Abhängigkeit von dem Temperaturkeil bzw. einem hiermit korrespondierenden Festigkeitskeil ermittelt werden kann. Der WO 2012/159 849 A1 ist jedoch nicht zu entnehmen, auf welche Art und Weise ein derartiger Temperaturkeil ermittelt werden könnte. Es ist jedoch bekannt, dass ein lokaler Temperaturkeil im überlappungsfreien Bereich zweier im Ofen benachbarter Brammen verstärkt ausgebildet ist.

Aus dem Fachaufsatz "Control of Pusher Furnaces for Steel Slab Reheating Using A Numerical Model" von P. Marino et al., veröffentlicht in Latin American Applied Research, Bd. 34, Seiten 249 bis 255 (2004) ist ein modellgestütztes Verfahren bekannt, mittels dessen die Temperatur einer Bramme als Funktion über die Länge der Bramme ermittelt werden kann. Bei dieser Schrift wird eine Abhängigkeit der Temperatur über die Breite ausdrücklich nicht betrachtet.

Aus dem Fachaufsatz "Online simulation model of the slabreheating process in a pusher-type furnace" von Anton_Jaklic et al., Applied Thermal Engineering, 27 (5-6), Seiten 1105 bis 1114, April 2007, ist bekannt mittels eines Simulationsmodells online die dreidimensionale Wärmeverteilung einer Bramme in einem Stoßofen zu ermitteln.

In der US 5511303 A, die die Basis für den Oberbegriff von Anspruch 1 bildet, ist eine Stranggussmaschine für mittlere Dicken, sowie mehreren Erwärmungsöfen und ein Walzwerk zur Erzeugung von Metallbändern, offenbart.

In ähnlicher Weise ist es auch möglich, dass sich während des Walzens der Bramme die Kontur ändert, mit der die Bramme aus dem den jeweiligen Walzstich ausführenden Walzgerüst ausläuft. Eine mögliche Ursache hierfür ist, dass beide Seiten einer Bramme mittels des Ofens in ihrem Kopfbereich und/oder in ihrem Fußbereich anders aufgeheizt werden als in ihrem Mittelbereich zwischen Kopf und Fuß. Auch derartige Konturänderungen sind nachteilig und sollten nach Möglichkeit vermieden werden.

### Zusammenfassung der Erfindung

Es ist möglich, mittels eines Modells die Temperaturverteilung in der Bramme zu ermitteln und sodann die ermittelte Temperaturverteilung im Rahmen der Ermittlung der Anstellung des Walzgerüsts zu verwerten. Hierfür muss das Modell, mittels dessen die Temperaturverteilung ermittelt wird, explizit implementiert werden. Weiterhin muss das Modell derart implementiert werden, dass mittels des Modells eine online-Ermittlung der Temperaturverteilung möglich ist. Dies ist mit einem erheblichen Aufwand und mit erheblichen Schwierigkeiten verbunden und auch sehr rechenintensiv.

Die Aufgabe der vorliegenden Erfindung besteht darin, Möglichkeiten zu schaffen, mittels derer auf einfache Weise eine Säbel- bzw. Hakenbildung beim Walzen einer Bramme zuverlässig vermieden oder zumindest reduziert werden kann. Hierbei soll es insbesondere nicht erforderlich sein, ein Temperaturmodell zu implementieren und mittels des Temperaturmodells eine Temperaturverteilung in den Brammen zu bestimmen. Nach Möglichkeit soll auch einer Konturänderung der Bramme entgegengewirkt werden.

Die Aufgabe wird durch ein Ermittlungsverfahren mit den Merkmalen des Anspruchs 1 gelöst. Vorteilhafte Ausgestaltungen dieses Ermittlungsverfahrens sind Gegenstand der abhängigen Ansprüche 2 bis 9.

Erfindungsgemäß wird ein Ermittlungsverfahren für eine Anstellung mindestens eines Walzgerüsts beim Walzen von Brammen in mindestens einem Walzstich geschaffen, wobei die Brammen einen Ofen in einer Förderrichtung durchlaufen, so dass sich jeweils mehrere Brammen im Ofen befinden, wobei die Brammen während des Durchlaufens des Ofens auf eine Endtemperatur aufgeheizt werden,
- wobei eine Ermittlungseinrichtung Informationen entgegennimmt, aus denen hervorgeht, welche Bereiche die Brammen beim Durchlaufen des Ofens in mindestens einer zur Förderrichtung orthogonalen Richtung relativ zueinander einnehmen,
- wobei die Ermittlungseinrichtung anhand der von ihr entgegengenommenen Informationen ohne vorherige Ermittlung einer jeweiligen Temperaturverteilung einer jeweiligen Bramme oder ohne Verwertung einer ermittelten Temperaturverteilung einer jeweiligen Bramme für mindestens einen Walzstich der jeweiligen Bramme die Anstellung des diesen Walzstich ausführenden Walzgerüsts ermittelt,
- wobei die Ermittlungseinrichtung bei der Ermittlung der Anstellung für die jeweilige Bramme den von der in Förderrichtung jeweils vorhergehenden Bramme relativ zur jeweiligen Bramme eingenommenen Bereich und/oder den von der in Förderrichtung jeweils nachfolgenden Bramme relativ zur jeweiligen Bramme eingenommenen Bereich berücksichtigt,
- wobei die Ermittlungseinrichtung die jeweilige ermittelte Anstellung des Walzgerüsts einer Steuereinrichtung zuführt, welche das Walzgerüst beim Walzen der jeweiligen Bramme unter Berücksichtigung der jeweiligen Anstellung steuert.

Die vorliegende Erfindung beruht zunächst auf der Erkenntnis, dass für den Betreiber des Walzgerüsts die Temperaturverteilung letztendlich nicht relevant ist. Er muss lediglich wissen, wie er sein Walzgerüst einstellen muss. Es ist daher möglich, die Ermittlung der Temperaturverteilung als solche zu "überspringen" bzw. nicht zu verwerten. Dadurch kann die Ermittlung der Anstellung erheblich vereinfacht werden.

Weiterhin beruht die vorliegende Erfindung auf der Erkenntnis, dass für die Bildung eines Hakens oder eines Säbels insbesondere relevant ist, in welchem Ausmaß benachbarte Brammen sich orthogonal zur Förderrichtung gesehen überlappen bzw. nicht überlappen. Gleiches gilt gegebenenfalls für den Fall, dass sich die Kontur der Bramme in Längsrichtung der Bramme gesehen ändert.

In der Regel wird die Überlappung der Brammen insbesondere in Längsrichtung der Brammen ermittelt werden. In Einzelfällen kann es aber auch sinnvoll sein, die Überlappung der Brammen in Dickenrichtung der Brammen zu ermitteln. Falls eine derartige Ermittlung in Dickenrichtung erfolgt, wird sie im Regelfall zusätzlich zur Überlappung der Brammen in Längsrichtung der Brammen durchgeführt werden. Sie kann im Einzelfall aber auch anstelle der Ermittlung der Überlappung der Brammen in Längsrichtung der Brammen durchgeführt werden.

In aller Regel wird die jeweilige Bramme nach dem ersten Walzstich mindestens einem weiteren Walzstich unterworfen. Der mindestens eine weitere Walzstich kann - im Falle eines Reversiergerüsts - in dem den ersten Walzstich ausführenden Walzgerüst ausgeführt werden. Alternativ kann der mindestens eine weitere Walzstich - im Falle einer mehrgerüstigen Walzstraße - in mindestens einem weiteren Walzgerüst ausgeführt werden. Vorzugsweise ermittelt die Ermittlungseinrichtung die Anstellung des Walzgerüsts zumindest für den ersten Walzstich, dem die jeweilige Bramme nach dem Verlassen des Ofens unterworfen wird. Dadurch ist es möglich, der Säbel- bzw. Hakenbildung und gegebenenfalls auch einer Konturänderung bereits beim ersten Walzstich entgegenzuwirken, bei dem noch keine vorherige Walzung erfolgt ist und demzufolge auch noch keine Werte aus einem vorherigen Walzstich zur Verfügung stehen. Es ist aber ebenso möglich - in Einzelfällen alternativ, im Regelfall zusätzlich - eine Anstellung für den mindestens einen weiteren Walzstich zu ermitteln.

Vorzugsweise nimmt die Ermittlungseinrichtung zusätzlich Informationen entgegen, aus denen hervorgeht, welchen Abstand in Förderrichtung benachbarte Brammen beim Durchlaufen des Ofens in der Förderrichtung voneinander aufweisen, und berücksichtigt den Abstand der in der Förderrichtung benachbarten Brammen bei der Ermittlung der Anstellung des diesen Walzstich ausführenden Walzgerüsts.

Diese Vorgehensweise ist insbesondere bei einem Hubbalkenofen von Vorteil, da bei einem Hubbalkenofen die in Förderrichtung benachbarten Brammen einen Abstand voneinander aufweisen. Dieser Abstand ist zwar in der Regel während des Transports der entsprechenden Brammen durch den Ofen konstant. Er ist aber nicht notwendigerweise von einem Paar zueinander benachbarter Brammen zum nächsten Paar zueinander benachbarter Brammen konstant. Bei einem Stoßofen hingegen liegen die benachbarten Brammen in der Regel unmittelbar aneinander an (Abstand = 0).

In der Regel ist die von der Ermittlungseinrichtung ermittelte jeweilige Anstellung in Breitenrichtung der jeweiligen Bramme ortsaufgelöst. Beispielsweise kann die Ermittlungseinrichtung einen Schwenkwert für eine asymmetrische Keilanstellung oder einen Biegewert für eine Walzenbiegung ermitteln.

Vorzugsweise ermittelt die Ermittlungseinrichtung die Anstellung des Walzgerüsts als Funktion über den Ort in Längsrichtung der jeweiligen Bramme oder als Funktion der Zeit. Dadurch kann einer Säbelbildung und einer Hakenbildung besser entgegengewirkt werden. Um einer Konturänderung entgegenwirken zu können, ist dies zwingend erforderlich.

Die Ortsauflösung in Längsrichtung der jeweiligen Bramme kann nach Bedarf bestimmt sein. Im einfachsten Fall kann beispielsweise nur zwischen einer Anstellung für das Walzen des Kopfes der Bramme und das Walzen des verbleibenden Teils der Bramme oder für das Walzen des Fußes der Bramme und das Walzen des verbleibenden Teils der Bramme unterschieden werden. Auch ist es möglich, zwischen einer Anstellung für das Walzen des Kopfes der Bramme, das Walzen eines Mittelteils (Filet) der Bramme und das Walzen des Fußes der Bramme zu unterscheiden. Auch ist es möglich, zwischen einer Anstellung für das Walzen des Kopfes der Bramme, das Walzen eines Übergangs vom Kopf der Bramme zum Filet der Bramme, das Walzen des Filets der Bramme, das Walzen eines Übergangs vom Filet der Bramme zum Fuß der Bramme und das Walzen des Fußes der Bramme zu unterscheiden. Auch andere Ortsauflösungen sind möglich. Weiterhin ist es möglich, beim Übergang von der Anstellung für einen Abschnitt der Bramme zu der Anstellung für den nächsten Abschnitt der Bramme einen kontinuierlichen Übergang vorzusehen, beispielsweise in Form einer Rampe. Für eine Bestimmung der Anstellung als Funktion der Zeit gelten analoge Ausführungen.

Vorzugsweise nimmt die Ermittlungseinrichtung weitere Parameter entgegen, welche die Brammen als solche beschreiben, und berücksichtigt die weiteren Parameter bei der Ermittlung der Anstellung des diesen Walzstich ausführenden Walzgerüsts. Dadurch kann der Säbel- bzw. Hakenbildung bzw. Konturänderung noch besser entgegengewirkt werden.

Als weitere Parameter kommen insbesondere die Breite der jeweiligen Bramme, deren chemische Zusammensetzung und gegebenenfalls deren Temperatur beim Zuführen zum Ofen in Frage. Die Längen und die Dicken der Brammen sind zwar ebenfalls wichtige Parameter. Sie sind an dieser Stelle aber nicht mit aufgeführt, da sie bereits - direkt oder indirekt - in den Informationen enthalten sind, welche festlegen, welche Bereiche die einzelnen Brammen in der mindestens einen zur Förderrichtung orthogonalen Richtung relativ zueinander einnehmen.

Vorzugsweise nimmt die Ermittlungseinrichtung eine Ofentemperatur und/oder eine Verweildauer der Brammen im Ofen entgegen und berücksichtigt die Ofentemperatur und/oder die Verweildauer der Brammen bei der Ermittlung der Anstellung des diesen Walzstich ausführenden Walzgerüsts. Auch dadurch kann der Säbel- bzw. Hakenbildung besser entgegengewirkt werden.

Vorzugsweise nimmt die Ermittlungseinrichtung Beschickungsdaten des Ofens entgegen, welche die Beschickung des Ofens mit den Brammen beschreiben, und berücksichtigt die Beschickungsdaten des Ofens bei der Ermittlung der Anstellung des diesen Walzstich ausführenden Walzgerüsts. Die Beschickung gibt also an, wie die jeweilige Bramme beim Zuführen zum Ofen im Ofen angeordnet wird. Sie gibt somit die anfängliche Lage der Bramme im Ofen an.

Die Beschickungsdaten können beispielsweise bei einem Hubbalkenofen indirekt den Abstand benachbarter Brammen in Förderrichtung bestimmen. Weiterhin können die Beschickungsdaten die Anordnung der Brammen relativ zueinander in Längsrichtung der Brammen festlegen und damit in Verbindung mit den Längen der Brammen Aufschluss darüber geben, welche Bereiche die Brammen orthogonal zur Förderrichtung einnehmen.

Alternativ ist es möglich, dass die Ermittlungseinrichtung sensorisch erfasste Daten entgegennimmt, welche dafür charakteristisch sind, welche Bereiche die Brammen im Ofen jeweils einnehmen. Entsprechende Sensoren sind Fachleuten allgemein bekannt. Rein beispielhaft seien eine Kamera, eine Lasersensorik und eine Ultraschallsensorik genannt. Im Falle einer sensorischen Erfassung von Daten können die Bereiche, welche die Brammen orthogonal zur Förderrichtung einnehmen, - gegebenenfalls mit zusätzlicher Verwertung der Dicke der Brammen - anhand der sensorisch erfassten Daten ermittelt werden.

Die Ermittlung der Anstellung kann auf verschiedene Art und Weise erfolgen. Beispielsweise ist es möglich, dass die Ermittlungseinrichtung die Anstellung des Walzgerüsts mittels einer mehrdimensionalen linearen Regression, mittels einer nichtlinearen Approximation durch mehrdimensionale Polynome oder Splines oder mittels eines neuronalen Netzes ermittelt.

Die Aufgabe wird weiterhin durch ein Computerprogramm mit den Merkmalen des Anspruchs 10 gelöst. Erfindungsgemäß umfasst das Computerprogramm Maschinencode, der von einer Ermittlungseinrichtung abarbeitbar ist, wobei die Abarbeitung des Maschinencodes durch die Ermittlungseinrichtung bewirkt, dass die Ermittlungseinrichtung ein erfindungsgemäßes Ermittlungsverfahren ausführt.

Die Aufgabe wird weiterhin durch eine Ermittlungseinrichtung mit den Merkmalen des Anspruchs 11 gelöst. Erfindungsgemäß ist die Ermittlungseinrichtung mit einem erfindungsgemäßen Computerprogramm programmiert, so dass die Ermittlungseinrichtung im Betrieb ein erfindungsgemäßes Ermittlungsverfahren ausführt.

Die Aufgabe wird weiterhin durch eine Kombination einer erfindungsgemäßen Ermittlungseinrichtung mit einer Steuereinrichtung mit den Merkmalen des Anspruchs 12 gelöst. Erfindungsgemäß sind die Steuereinrichtung und die Ermittlungseinrichtung datentechnisch miteinander verbunden, so dass die Ermittlungseinrichtung die von ihr ermittelten Anstellungen des Walzgerüsts an die Steuereinrichtung übermittelt. Weiterhin steuert die Steuereinrichtung das Walzgerüst beim Walzen der jeweiligen Bramme. Die Steuereinrichtung berücksichtigt die ihr übermittelten Anstellungen des Walzgerüsts beim Walzen der Brammen.

Die Aufgabe wird weiterhin durch eine Walzanlage zum Walzen von Brammen mit den Merkmalen des Anspruchs 13 gelöst. Erfindungsgemäß weist die Walzanlage mindestens einen Ofen auf, den die Brammen in einer Förderrichtung durchlaufen und mittels dessen die Brammen auf eine Endtemperatur aufheizbar sind. Der Ofen ist derart dimensioniert, dass sich in Förderrichtung gesehen gleichzeitig mehrere Brammen im Ofen befinden. Die Walzanlage weist weiterhin mindestens ein Walzgerüst auf, dem die Brammen zum Walzen zugeführt werden. Schließlich weist die Walzanlage eine erfindungsgemäße Kombination (siehe vorstehend) auf, wobei das mindestens eine Walzgerüst von der Steuereinrichtung der Kombination gesteuert wird.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Walzanlage,
- FIG 2 bis 5: Ablaufdiagramme und
- FIG 6 und 7: ein Walzgerüst in Walzrichtung gesehen.

### Beschreibung der Ausführungsformen

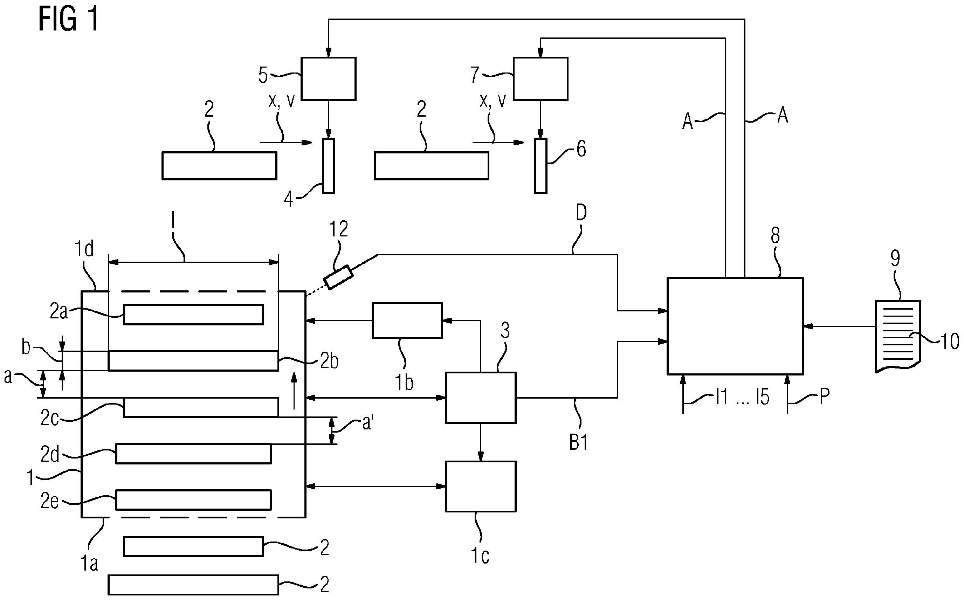

Gemäß FIG 1 weist eine Walzanlage mindestens einen Ofen 1 auf. Der Ofen 1 kann beispielsweise als Stoßofen oder als Hubbalkenofen ausgebildet sein. Er ist entsprechend der Darstellung in FIG 1 derart dimensioniert, dass sich in einer Förderrichtung y gesehen gleichzeitig mehrere Brammen 2 im Ofen befinden. Die Brammen 2 weisen daher in Förderrichtung y gesehen jeweils eine vorhergehende Bramme 2 und eine nachfolgende Bramme 2 auf. Die Darstellung in FIG 1, bei welcher sich im Ofen 1 insgesamt fünf Brammen 2 befinden, ist jedoch nur rein beispielhaft.

Die Brammen 2 werden dem Ofen 1 an einem Ofeneingang 1a sequenziell nacheinander zugeführt und mittels einer entsprechenden Fördereinrichtung 1b in der Förderrichtung y durch den Ofen 1 transportiert. Die Brammen 2 sind in FIG 1 entsprechend der Reihenfolge, in der sie dem Ofen 1 zugeführt werden, durch einen kleinen Buchstaben a, b usw. ergänzt. Während des Transports durch den Ofen 1 werden die Brammen 2 mittels einer entsprechenden Heizeinrichtung 1c auf ihre Walztemperatur aufgeheizt. Nach dem Aufheizen werden die Brammen 2 an einem Ofenausgang 1d aus dem Ofen 1 ausgefördert. Der Ofeneingang 1a, die Fördereinrichtung 1b, die Heizeinrichtung 1c und der Ofenausgang 1d sind Bestandteile des Ofens 1.

Die Brammen 2 bestehen in der Regel aus Stahl. Alternativ können sie aus einem anderen Metall bestehen, beispielsweise aus Aluminium. Die Brammen 2 weisen, wie in FIG 1 exemplarisch für eine der Brammen 2 dargestellt ist, jeweils eine Länge l und eine Breite b auf. Sie weisen weiterhin auch eine Dicke d auf. Die Dicke d ist in FIG 1 und auch den anderen FIG jedoch nicht erkennbar. Die Länge l liegt meist im Bereich zwischen 10 m und 25 m. Die Breite b liegt meist im Bereich zwischen 50 cm und 3,0 m. Die Dicke d liegt meist im Bereich zwischen 50 mm und 300 mm. Sowohl die Länge l als auch die Breite b als auch die Dicke d können von Bramme 2 zu Bramme 2 verschieden sein. Die Walztemperatur - d.h. diejenige Temperatur, mittels derer das Walzen nach dem Ausfördern der jeweiligen Bramme 2 aus dem Ofen 1 beginnt, - liegt bei Stahl in der Regel zwischen 950 °C und 1200 °C, bei anderen Metallen entsprechend höher oder niedriger. Eine Endtemperatur, mit welcher die Brammen 2 aus dem Ofen 1 austreten, liegt demzufolge bei der Walztemperatur oder geringfügig darüber. Der Ofen 1 wird von einer Steuereinrichtung 3 gesteuert, die nachfolgend als Ofensteuerung 3 bezeichnet wird.

Nach dem Ausfördern der jeweiligen Bramme 2 aus dem Ofen 1 wird die jeweilige Bramme 2 einem Walzgerüst 4 zugeführt. Das Walzgerüst 4 wird nachfolgend bei Bedarf als erstes Walzgerüst 4 bezeichnet, weil es dasjenige Walzgerüst ist, das nach dem Ausfördern der jeweiligen Bramme 2 aus dem Ofen 1 den ersten Walzstich ausführt. In dem Walzgerüst 4 wird die jeweilige Bramme 2 somit gewalzt. Das Walzgerüst 4 wird von einer Steuereinrichtung 5 gesteuert, die nachfolgend bei Bedarf als erste Gerüststeuerung 5 bezeichnet wird. Das Steuern des ersten Walzgerüsts 4 durch die erste Gerüststeuerung 5 erfolgt unter anderem auch dann, wenn die jeweilige Bramme 2 in dem ersten Walzgerüst 4 gewalzt wird.

Oftmals sind zusätzlich zu dem ersten Walzgerüst 4 weitere Walzgerüste 6 vorhanden. Die weiteren Walzgerüste 6 werden von einer jeweiligen Steuereinrichtung 7 gesteuert, die nachfolgend bei Bedarf als weitere Gerüststeuerungen 7 bezeichnet werden. Von den weiteren Walzgerüsten 6 ist in FIG 1 nur eines dargestellt. Gleiches gilt für die weiteren Gerüststeuerungen 7. Ob und gegebenenfalls wie viele weitere Walzgerüste 6 vorhanden sind, kann von Fall zu Fall variieren. Die Gerüststeuerungen 5, 7 können nach Bedarf als voneinander getrennte Einheiten ausgebildet sein oder zu einer gemeinsamen Einheit zusammengefasst sein. Das Walzen der Brammen 2 erfolgt in dem ersten Walzgerüst 4 und auch in den weiteren Walzgerüsten 6 in einer Walzrichtung x mit einer Walzgeschwindigkeit v. Die Walzrichtung x ist in der Regel für alle Walzgerüste 4, 6 einheitlich. Die Walzgeschwindigkeit v ist in der Regel von Walzgerüst 4, 6 zu Walzgerüst 4, 6 verschieden.

Falls die Brammen 2 in dem ersten Walzgerüst 4 und/oder den weiteren Walzgerüsten 6 reversierend gewalzt werden, erfolgt in den Walzgerüsten 4, 6 auch ein Walzen der Brammen 2 entgegen der in FIG 1 mit x bezeichneten Walzrichtung. Oftmals werden beispielsweise die Brammen 2 zunächst in dem ersten Walzgerüst 4 in mehreren Stichen reversierend vorgewalzt und sodann in den weiteren Walzgerüsten 6 in je einem Stich pro weiterem Walzgerüst 6 fertiggewalzt. In aller Regel ist die Walzrichtung x orthogonal zur Förderrichtung y und verläuft in Längsrichtung der Brammen 2.

Der guten Ordnung halber sei erwähnt, dass die Darstellung in FIG 1 rein schematisch ist. Insbesondere sind Abstände und Abstandsverhältnisse nicht maßstabsgetreu. So weist beispielsweise das erste Walzgerüst 4 von den weiteren Walzgerüsten 6 oftmals einen erheblich größeren Abstand auf als die weiteren Walzgerüste 6 voneinander. Meist liegt der Abstand, der zwischen den einzelnen weiteren Walzgerüsten 6 liegt, zwischen 4 m und 7 m. Der Abstand vom ersten Walzgerüst 4 zum nächsten Walzgerüst 6 liegt in oftmals bei 50 m und mehr. In der Regel werden die Brammen 2, bevor das Walzen der jeweiligen Bramme 2 in einem weiteren Walzgerüst 6 beginnt, in dem ersten Walzgerüst 4 reversierend gewalzt.

Mindestens eine der Gerüststeuerungen 5, 7 ist mit einer Ermittlungseinrichtung 8 datentechnisch verbunden. Insbesondere ist in der Regel zumindest die erste Gerüststeuerung 5 mit der Ermittlungseinrichtung 8 datentechnisch verbunden. Aufgrund der datentechnischen Verbindung ist es möglich, dass die Ermittlungseinrichtung 8 von ihr ermittelte Anstellungen A des entsprechenden Walzgerüsts 4, 6 für einen entsprechenden Walzstich einer jeweiligen Bramme 2 an die entsprechende Gerüststeuerung 5, 7 übermittelt. Die jeweilige Gerüststeuerung 5, 7 berücksichtigt die an sie übermittelte jeweilige Anstellung A beim Walzen der jeweiligen Bramme 2.

Die Ermittlungseinrichtung 8 ist, um die Anstellungen A ermitteln zu können, mit einem Computerprogramm 9 programmiert. Das Computerprogramm 9 umfasst Maschinencode 10, der von der Ermittlungseinrichtung 8 abarbeitbar ist. Die Abarbeitung des Maschinencodes 10 durch die Ermittlungseinrichtung 8 bewirkt, dass die Ermittlungseinrichtung 8 ein Ermittlungsverfahren ausführt, das nachstehend rein beispielhaft für die Bramme 2c näher erläutert wird. Für die anderen Brammen 2 gelten analoge Ausführungen.

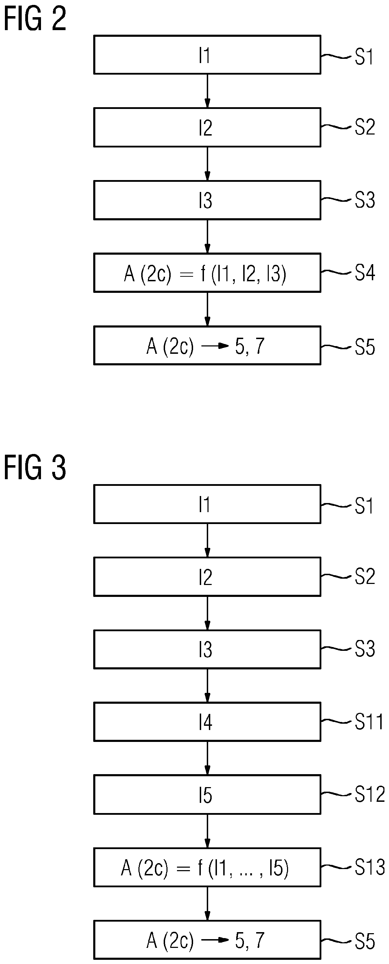

Gemäß FIG 2 nimmt die Ermittlungseinrichtung 8 in einem Schritt S1 für eine bestimmte Bramme 2 - gemäß dem Beispiel also die Bramme 2c - Informationen I1 entgegen, aus denen hervorgeht, welchen Bereich diese Bramme 2c in mindestens einer zur Förderrichtung y orthogonalen Richtung x, z einnimmt. Mit x ist hierbei die Längsrichtung der Bramme 2c bezeichnet, mit z die Dickenrichtung. Beispielsweise kann der Ermittlungseinrichtung 8 vorgegeben werden, an welcher Stelle in Längsrichtung x gesehen die jeweilige Bramme 2c beginnt und wie lang sie ist oder wo sie endet. Alternativ oder zusätzlich kann der Ermittlungseinrichtung 8 die Dicke der Bramme 2c vorgegeben werden.

Sodann nimmt die Ermittlungseinrichtung 8 in einem Schritt S2 für die vorhergehende Bramme 2 - gemäß dem Beispiel also die Bramme 2b - Informationen I2 entgegen, aus denen hervorgeht, welchen Bereich diese Bramme 2b in der mindestens einen zur Förderrichtung y orthogonalen Richtung x, z einnimmt. Die Informationen I2 können von ihrer Art her insbesondere gleichartig zu den Informationen I1 sein. Die konkreten Werte sind aber individuell für die Bramme 2b.

Sodann nimmt die Ermittlungseinrichtung 8 in einem Schritt S3 für die nachfolgende Bramme 2 - gemäß dem Beispiel also die Bramme 2d - Informationen I3 entgegen, aus denen hervorgeht, welchen Bereich diese Bramme 2d in der mindestens einen zur Förderrichtung y orthogonalen Richtung x, z einnimmt. Auch die Informationen I3 können von ihrer Art her gleichartig zu den Informationen I1 sein. Die konkreten Werte sind aber auch hier wieder individuell für die Bramme 2d.

In einem Schritt S4 ermittelt die Ermittlungseinrichtung 8 anhand der von ihr entgegengenommenen Informationen I1, I2, I3 für mindestens einen Walzstich der Bramme 2c die Anstellung A des diesen Walzstich ausführenden Walzgerüsts 4, 6. Die Ermittlung der Anstellung A im Schritt S4 erfolgt ohne vorherige Ermittlung einer Temperaturverteilung der Bramme 2c. Die Ermittlungseinrichtung 8 berücksichtigt jedoch bei der Ermittlung der Anstellung A der Bramme 2c den von der Bramme 2b relativ zur Bramme 2c eingenommenen Bereich. Alternativ oder zusätzlich berücksichtigt die Ermittlungseinrichtung 8 den von der Bramme 2d relativ zur Bramme 2c eingenommenen Bereich. In einem Schritt S5 führt die Ermittlungseinrichtung 8 die ermittelte Anstellung A der Steuereinrichtung 5, 7 desjenigen Walzgerüsts 4, 6 zu, das diesen Walzstich ausführt.

Rein theoretisch könnte natürlich auch eine Temperaturverteilung für die jeweilige Bramme 2 ermittelt werden. Falls dies erfolgt, wird die ermittelte Temperaturverteilung im Rahmen der Ermittlung der Anstellung A jedoch nicht berücksichtigt bzw. verwertet.

Um eine Ermittlung der jeweiligen Anstellung A ohne vorherige Ermittlung der Temperaturverteilung vornehmen zu können, muss der Ermittlungseinrichtung 8 insbesondere bekannt sein, bei welcher Überlappung der jeweiligen Bramme 2c mit der vorhergehenden und/oder der nachfolgenden Bramme 2b, 2d (Eingangsgrößen) welche Anstellung A (Ausgangsgröße) erforderlich ist, um die jeweilige Bramme 2c so wie gewünscht - beispielsweise unter Vermeidung eines Säbels bzw. eines Hakens oder unter Ausgleich einer anderenfalls erfolgenden Konturänderung - zu walzen. Dieser Zusammenhang kann beispielsweise mittels einer offline vorgenommenen Auswertung von Daten ermittelt werden, wobei die Daten über einen längeren Zeitraum erfasst werden. Alternativ oder zusätzlich kann der Zusammenhang mittels eines geeigneten Lernalgorithmus - gegebenenfalls auch online - ermittelt werden. Eine in diesem Fall für den Lernvorgang erforderliche Erfassung beispielsweise eines sich bildenden Hakens bzw. eines sich bildenden Säbels, einer Kontur oder eines Profils ist allgemein bekannt.

Beispielsweise ist es möglich, dass die Ermittlungseinrichtung 8 die Anstellung A des Walzgerüsts 4 bzw. des Walzgerüsts 6 zum Walzen der Bramme 2c mittels einer mehrdimensionalen linearen Regression ermittelt. Eingangsgrößen der Regression können beispielsweise ein - positiver oder negativer - Überstand des Kopfes und/oder des Fußes der Bramme 2c über die vorausgehende Bramme 2b und in analoger Weise ein - positiver oder negativer - Überstand des Kopfes und/oder des Fußes der Bramme 2c über die nachfolgende Bramme 2d sein. In ähnlicher Weise können auch die Dicken d der Brammen 2c, 2b, 2d eingehen. Alternativ ist eine Ermittlung mittels einer nichtlinearen Approximation durch mehrdimensionale Polynome oder Splines möglich. Die Eingangsgrößen der nichtlinearen Approximation können dieselben sein wie bei der Regression. Wiederum alternativ ist eine Ermittlung mittels eines neuronalen Netzes möglich. Ausgangsgröße ist in jedem Fall die jeweilige Anstellung A des jeweiligen Walzgerüsts 4, 6 zum Walzen der Bramme 2c im jeweiligen Walzstich.

Aufgrund des Umstands, dass die Gerüststeuerungen 5, 7 die übermittelte Anstellung A beim Walzen der jeweiligen Bramme 2c berücksichtigen, ergibt sich die Randbedingung, dass die Ermittlungseinrichtung 8 die Vorgehensweise von FIG 2 online und in Echtzeit ausführen muss. Insbesondere muss die Ermittlung der Anstellung A spätestens beim Ausfördern der jeweiligen Bramme 2c aus dem Ofen 1 ausgeführt und abgeschlossen werden.

FIG 3 zeigt eine Ausgestaltung von FIG 2. Im Rahmen der Ausgestaltung von FIG 3 sind zusätzlich Schritte S11 und S12 vorhanden. Weiterhin ist der Schritt S4 durch einen Schritt S13 ersetzt.

Im Schritt S11 nimmt die Ermittlungseinrichtung 8 zusätzlich Informationen I4 entgegen, aus denen hervorgeht, welchen Abstand a die Bramme 2b in Förderrichtung y gesehen zur Bramme 2c aufweist. In analoger Weise nimmt die Ermittlungseinrichtung 8 im Schritt S12 Informationen I5 entgegen, aus denen hervorgeht, welchen Abstand a' die Bramme 2d in Förderrichtung y gesehen zur Bramme 2c aufweist. Der Schritt S12 ist in der Regel zusätzlich zum Schritt S11 vorhanden. Im Einzelfall kann alternativ zum Schritt S11 vorhanden sein. Im Schritt S13 ermittelt die Ermittlungseinrichtung 8 - vom Ansatz her wie zuvor im Schritt S4 - die Anstellung A für den jeweiligen Walzstich. Sie berücksichtigt jedoch zusätzlich auch die Abstände a, a' bzw. zumindest einen der Abstände a, a'. Das Lernen der erforderlichen Zusammenhänge kann - wie zuvor - mittels einer offline oder online vorgenommenen Auswertung von Daten ermittelt werden, wobei die Daten über einen längeren Zeitraum erfasst werden.

Die Vorgehensweise von FIG 2 kann auch durch weitere Ausgestaltungen ergänzt werden, wobei diese Ausgestaltungen nach Bedarf auch untereinander und mit der Ausgestaltung von FIG 3 kombiniert werden können.

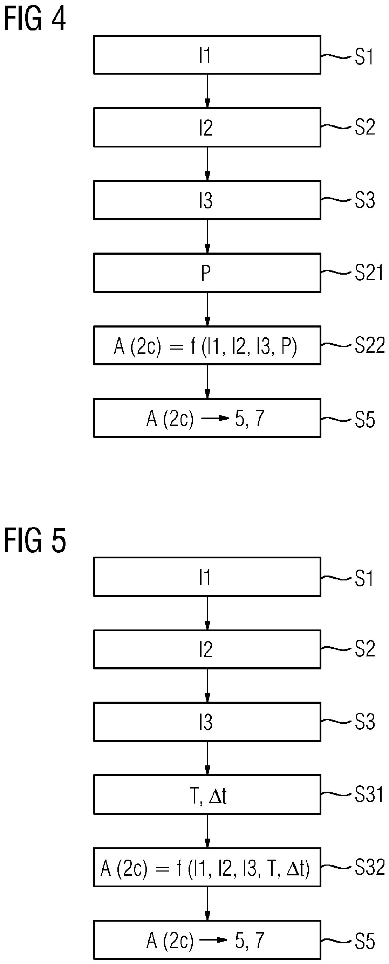

So ist es beispielsweise entsprechend der Darstellung in FIG 4 möglich, dass die Ermittlungseinrichtung 8 in einem zusätzlichen Schritt S21 weitere Parameter P entgegennimmt, welche die jeweilige Bramme 2c als solche beschreiben. Beispiele derartiger Parameter P sind insbesondere die Breite b der jeweiligen Bramme 2c, deren chemische Zusammensetzung C und eine Anfangstemperatur T0, mit welcher die jeweilige Bramme 2c dem Ofen 1 zugeführt wird. In diesem Fall ist der Schritt S4 durch einen Schritt S22 ersetzt, in dem die Ermittlungseinrichtung 8 bei der Ermittlung der Anstellung A - zusätzlich zu den Maßnahmen des Schrittes S4 - auch die Parameter P mit berücksichtigt. Soweit erforderlich, kann die Ermittlungseinrichtung 8 bei der Ermittlung der Anstellung A auch entsprechende Parameter P der vorhergehenden Bramme 2b und der nachfolgenden Bramme 2d mit berücksichtigen.

Auch ist es entsprechend der Darstellung in FIG 5 möglich, dass die Ermittlungseinrichtung 8 in einem zusätzlichen Schritt S31 eine Ofentemperatur T und/oder eine Verweildauer Δt der Brammen 2 im Ofen 1 entgegennimmt. In diesem Fall ist der Schritt S4 durch einen Schritt S32 ersetzt, in dem die Ermittlungseinrichtung 8 bei der Ermittlung der Anstellung A - zusätzlich zu den Maßnahmen des Schrittes S4 - auch die Ofentemperatur T und/oder die Verweildauer Δt mit berücksichtigt.

Die Anstellung A kann ein absoluter Wert sein ("auf diese Anstellung soll das Walzgerüst 4, 6 eingestellt werden") oder ein relativer Wert sein ("um diesen Wert soll die Anstellung des Walzgerüsts 4, 6 gegenüber der Anstellung für die zu vorgewalzte Bramme 2 geändert werden"). In beiden Fällen ist die von der Ermittlungseinrichtung 8 ermittelte Anstellung A jedoch in der Regel in Breitenrichtung der jeweiligen Bramme 2 ortsaufgelöst. Insbesondere kann die ermittelte Anstellung A eine Keilanstellung δs (also eine asymmetrische Einstellung des Walzspaltes) und/oder eine Walzenbiegung B definieren.

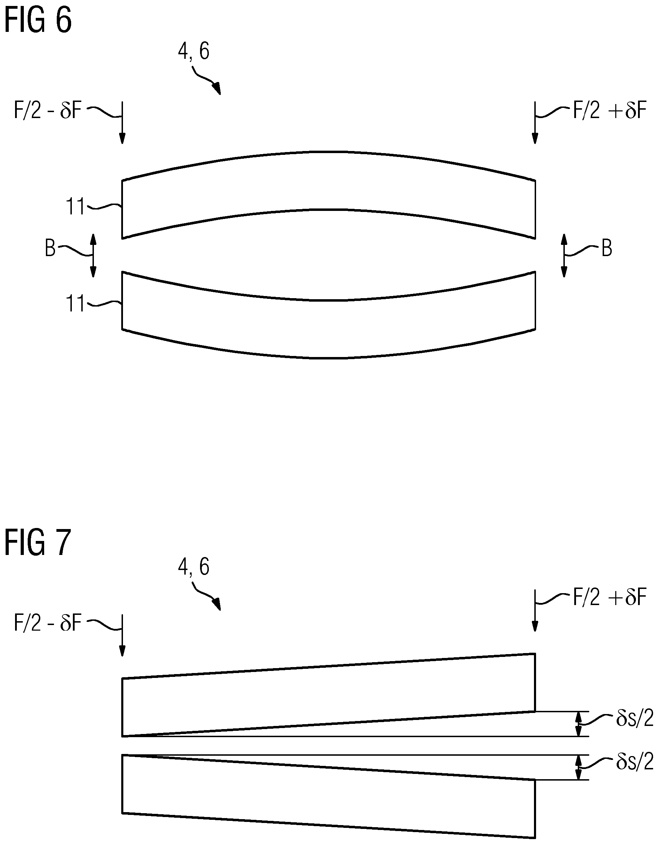

Zum Umsetzen der ermittelten Anstellung A in Stellgrößen für die Walzgerüste 4, 6 können die Gerüststeuerungen 5, 7 anhand der Anstellung A eine Walzenbiegung B, eine Keilanstellung δs, eine Gesamtwalzkraft F und eine Differenzwalzkraft δF ermitteln. Die Walzenbiegung B beschreibt entsprechend der Darstellung in FIG 6 ein Ausmaß, in welchem Arbeitswalzen 11 des jeweiligen Walzgerüsts 4, 6 symmetrisch gebogen werden. Die Keilanstellung δs beschreibt entsprechend der Darstellung in FIG 7 ein Ausmaß, in welchem die Arbeitswalzen 11 des jeweiligen Walzgerüsts 4, 6 asymmetrisch eingestellt werden. Die Gesamtwalzkraft F wird entsprechend der Darstellung in den FIG 6 und 7 gleichmäßig auf die Bedienseite und die Antriebsseite des jeweiligen Walzgerüsts 4, 6 verteilt, die Differenzwalzkraft δF wird einer Seite mit positivem Vorzeichen und einer Seite mit negativem Vorzeichen zugeführt. Die Vorgehensweisen der FIG 6 und 7 können miteinander kombiniert werden. Sie sind in den FIG 6 und 7 nur aus Gründen der besseren Darstellung getrennt voneinander dargestellt. Bezüglich der Ermittlung der Stellgrößen anhand der Anstellung A als solcher kann auf die bereits erwähnte WO 2012/159 849 A1 verwiesen werden.

Es können alternativ oder zusätzlich auch weitere Stellglieder entsprechend beeinflusst werden, beispielsweise eine Walzenschiebung oder eine Walzenverschränkung oder eine in Breitenrichtung des jeweiligen Walzgerüsts 4, 6 lokale Kühlung und/oder Beheizung der Arbeitswalzen 11 des jeweiligen Walzgerüsts 4, 6 oder eine Temperaturbeeinflussung der jeweiligen Bramme 2c kurz vor oder kurz nach dem entsprechenden Walzgerüst 4, 6, beispielsweise durch eine segmentierte Kühlung oder durch eine Kantenerwärmung.

Vorzugsweise ermittelt die Ermittlungseinrichtung 8 die Anstellung A des Walzgerüsts 4, 6 als Funktion über den Ort in Längsrichtung der jeweiligen Bramme 2c oder als Funktion der Zeit. In diesem Fall sind die Gerüststeuerungen 5, 7 in der Lage, die an sie übermittelte Anstellung A des entsprechenden Walzgerüsts 4, 6 entsprechend zu berücksichtigen. Es können prinzipiell die gleichen Größen wie zuvor in Verbindung mit den FIG 6 und 7 erläutert ermittelt werden. Der Unterschied besteht jedoch darin, dass nunmehr die ermittelte Anstellung A in Längsrichtung der jeweiligen Bramme 2 ortsaufgelöst sind. Da weiterhin die jeweilige Bramme 2c entsprechend der Darstellung in FIG 1 dem jeweiligen Walzgerüst 4, 6 mit einer Geschwindigkeit v zugeführt wird, kann die jeweilige Anstellung A des jeweiligen Walzgerüsts 4, 6 auch als Funktion der Zeit definiert sein. Dies ist bei bekannter Geschwindigkeit v gleichwertig zu einer Ortsauflösung in Längsrichtung der jeweiligen Bramme 2c.

Um der Ermittlungseinrichtung 8 die Informationen I1, I2, I3 und gegebenenfalls auch I4, I5 und/oder P vorzugeben, sind verschiedene Vorgehensweisen möglich. So ist es beispielsweise möglich, die Schritte S1 bis S3 und gegebenenfalls auch S11, S12 und/oder S21 dadurch zu implementieren, dass die Ermittlungseinrichtung 8 Beschickungsdaten B1 des Ofens 1 entgegennimmt, welche die Beschickung des Ofens 1 mit den Brammen 2 beschreiben. In diesem Fall ergibt sich aus den Beschickungsdaten B1 zumindest der jeweilige Bereich orthogonal zur Förderrichtung y, den die Brammen 2 einnehmen. Beispielsweise können die Beschickungsdaten B1 angeben, ob die jeweilige Bramme 2 quer zur Förderrichtung gesehen dem Ofen 1 linksbündig, rechtsbündig oder mittig zugeführt wird. Gegebenenfalls gönnen sich aus den Beschickungsdaten B1 auch die weiteren Angaben wie beispielsweise die Breiten b der Brammen 2, deren chemische Zusammensetzung C, deren Anfangstemperaturen T0 und deren Abstände a, a' voneinander in Förderrichtung y ergeben. Alternativ ist es möglich, dass entsprechend der Darstellung in FIG 1 ein Sensor 12 vorhanden ist, der sensorisch Daten D erfasst und die Daten D der Ermittlungseinrichtung 8 zuführt. In diesem Fall kann die Ermittlungseinrichtung 8 die entsprechenden Informationen I1, I2, I3 und gegebenenfalls auch I4, I5 anhand der Daten D ermitteln. Geeignete Sensoren 12 sind Fachleuten allgemein bekannt. Rein beispielhaft seien Kameras, Ultraschallsensoren und Lasersensoren genannt.

Die vorliegende Erfindung weist viele Vorteile auf. Insbesondere ist es möglich, bereits beim ersten Walzstich einer Bramme 2 und auch hier von Anfang an einer Haken- oder Säbelbildung entgegenzuwirken. Weiterhin ist es bei Ermittlung eines in Längsrichtung der Brammen 2 ortsaufgelösten Verlaufs für die Anstellungen A möglich, einer Hakenbildung bzw. einer Säbelbildung und gegebenenfalls auch einer Konturänderung sehr effizient entgegenzuwirken. Das Ermittlungsverfahren kann ohne weiteres in den Echtzeitbetrieb des Ofens 1 und der Walzgerüste 4, 6 eingebunden werden.

Es ist sogar möglich, die entsprechenden Ermittlungen vorab nur rein rechnerisch mit einer vorläufigen Beschickung des Ofens 1 vorzunehmen und sodann rein rechnerisch die Beschickung des Ofens 1 mit den Brammen 2 mit dem Ziel einer Optimierung zu variieren. In diesem Fall erfolgen die spätere tatsächliche Beschickung des Ofens 1 mit den Brammen 2 entsprechend den zuvor als optimal ermittelten Werten. Beispielsweise kann im Rahmen der Beschickung die Reihenfolge der Brammen 2 variiert werden. Ziel der Optimierung kann beispielsweise eine möglichst geringe Keilanstellung δs mindestens eines Walzstichs und/oder eine Annäherung der Walzenbiegung B der Arbeitswalzen 11 bei mindestens einem Walzstich an einen Sollwert sein.

Weiterhin ist es jederzeit möglich, die Methode, mittels derer die Ermittlungseinrichtung 8 die jeweilige Anstellung A ermittelt, nachzulernen bzw. zu adaptieren. Hierfür ist es lediglich erforderlich, auslaufseitig des jeweiligen Walzgerüsts 4, 6 beispielsweise den sich ergebenden Haken oder Säbel bzw. die Konturänderung messtechnisch zu erfassen und dem Lernalgorithmus zuzuführen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den durch die Ansprüche definierten Schutzumfang der Erfindung zu verlassen.

### Bezugszeichenliste

- 1: Ofen
- 1a: Ofeneingang
- 1b: Fördereinrichtung
- 1c: Heizeinrichtung
- 1d: Ofenausgang
- 2, 2a bis 2e: Brammen
- 3: Ofensteuerung
- 4, 6: Walzgerüste
- 5, 7: Gerüststeuerungen
- 8: Ermittlungseinrichtung
- 9: Computerprogramm
- 10: Maschinencode
- 11: Arbeitswalzen
- 12: Sensor
- A: Anstellungen
- a, a': Abstände
- B: Walzenbiegung
- b: Breite
- B1: Beschickungsdaten
- C: Chemische Zusammensetzung
- D: Daten
- d: Dicke
- F: Gesamtwalzkraft
- I1 bis I5: Informationen
- l: Länge
- P: Parameter
- S1 bis S32: Schritte
- T: Ofentemperatur
- T0: Anfangstemperatur
- x: Walzrichtung
- y: Förderrichtung
- z: Dickenrichtung
- δF: Differenzwalzkraft
- δs: Keilanstellung
- Δt: Verweildauer

## Patentansprüche

1. Ermittlungsverfahren für eine Anstellung (A) mindestens eines Walzgerüsts (4, 6) beim Walzen von Brammen (2) in mindestens einem Walzstich, wobei die Brammen (2) einen Ofen (1) in einer Förderrichtung (y) durchlaufen, so dass sich jeweils mehrere Brammen (2) im Ofen (1) befinden, wobei die Brammen (2) während des Durchlaufens des Ofens (1) auf eine Endtemperatur aufgeheizt werden, **dadurch gekennzeichnet, dass**
- eine Ermittlungseinrichtung (8) Informationen (I1, I2, I3) entgegennimmt, aus denen hervorgeht, welche Bereiche die Brammen (2) beim Durchlaufen des Ofens (1) in mindestens einer zur Förderrichtung (y) orthogonalen Richtung (x, z) relativ zueinander einnehmen,
- wobei die Ermittlungseinrichtung (8) anhand der von ihr entgegengenommenen Informationen (I1, I2, I3) ohne vorherige Ermittlung einer jeweiligen Temperaturverteilung einer jeweiligen Bramme (2) oder ohne Verwertung einer ermittelten Temperatur einer jeweiligen Bramme (2) für mindestens einen Walzstich der jeweiligen Bramme (2) die Anstellung (A) des diesen Walzstich ausführenden Walzgerüsts (4, 6) ermittelt,
- wobei die Ermittlungseinrichtung (8) bei der Ermittlung der Anstellung (A) für die jeweiligen Bramme (2) den von der in Förderrichtung (y) jeweils vorhergehenden Bramme (2) relativ zur jeweiligen Bramme (2) eingenommenen Bereich und/ oder den von der in Förderrichtung (y) jeweils nachfolgenden Bramme (2) relativ zur jeweiligen Bramme (2) eingenommenen Bereich berücksichtigt,
- wobei die Ermittlungseinrichtung (8) die jeweilige ermittelte Anstellung (A) des Walzgerüsts (4, 6) einer Steuereinrichtung (5, 7) zuführt, welche das Walzgerüst (4, 6) beim Walzen der jeweiligen Bramme (2) unter Berücksichtigung der jeweiligen Anstellung (A) steuert.

2. Ermittlungsverfahren nach Anspruch 1,
**dadurch gekennzeichnet,**
**dass** die Ermittlungseinrichtung (8) zusätzlich Informationen (pi) entgegennimmt, aus denen hervorgeht, welchen Abstand (a, a') in Förderrichtung (y) benachbarte Brammen (2) beim Durchlaufen des Ofens (1) in der Förderrichtung (y) voneinander aufweisen, und dass die Ermittlungseinrichtung (8) den Abstand (a, a') der in der Förderrichtung (y) benachbarten Brammen (2) bei der Ermittlung der Anstellung (A) des diesen Walzstich ausführenden Walzgerüsts (4, 6) berücksichtigt.

3. Ermittlungsverfahren nach Anspruch 1 oder 2,
**dadurch gekennzeichnet,**
**dass** die jeweilige Anstellung (A) in Breitenrichtung der jeweiligen Bramme (2) ortsaufgelöst ist.

4. Ermittlungsverfahren nach Anspruch 1, 2 oder 3,
**dadurch gekennzeichnet,**
**dass** die Ermittlungseinrichtung (8) die Anstellung (A) des Walzgerüsts (4, 6) als Funktion über den Ort in Längsrichtung der jeweiligen Bramme (2) oder als Funktion der Zeit ermittelt.

5. Ermittlungsverfahren nach einem der obigen Ansprüche,
**dadurch gekennzeichnet,**
**dass** die Ermittlungseinrichtung (8) weitere Parameter (P) entgegennimmt, welche die Brammen (2) als solche beschreiben, und dass die Ermittlungseinrichtung (8) die weiteren Parameter (P) bei der Ermittlung der Anstellung (A) des diesen Walzstich ausführenden Walzgerüsts (4, 6) berücksichtigt.

6. Ermittlungsverfahren nach einem der obigen Ansprüche,
**dadurch gekennzeichnet,**
**dass** die Ermittlungseinrichtung (8) eine Ofentemperatur (T) und/oder eine Verweildauer (Δt) der Brammen (2) im Ofen (1) entgegennimmt und dass die Ermittlungseinrichtung (8) die Ofentemperatur (T) und/oder die Verweildauer (Δt) der Brammen (2) bei der Ermittlung der Anstellung (A) des diesen Walzstich ausführenden Walzgerüsts (4, 6) berücksichtigt.

7. Ermittlungsverfahren nach einem der Ansprüche 1 bis 6,
**dadurch gekennzeichnet,**
**dass** die Ermittlungseinrichtung (8) Beschickungsdaten (B1) des Ofens (1) entgegennimmt, welche die Beschickung des Ofens (1) mit den Brammen (2) beschreiben, und dass die Ermittlungseinrichtung (8) die Beschickungsdaten (B1) des Ofens (1) bei der Ermittlung der Anstellung (A) des diesen Walzstich ausführenden Walzgerüsts (4, 6) berücksichtigt.

8. Ermittlungsverfahren nach einem der Ansprüche 1 bis 6,
**dadurch gekennzeichnet,**
**dass** die Ermittlungseinrichtung (8) sensorisch erfasste Daten (D) entgegennimmt, welche dafür charakteristisch sind, welche Bereiche die Brammen (2) im Ofen (1) jeweils einnehmen.

9. Ermittlungsverfahren nach einem der obigen Ansprüche,
**dadurch gekennzeichnet,**
**dass** die Ermittlungseinrichtung (8) die Anstellung (A) des Walzgerüsts (4, 6) mittels einer mehrdimensionalen linearen Regression, mittels einer nichtlinearen Approximation durch mehrdimensionale Polynome oder Splines oder mittels eines neuronalen Netzes ermittelt.

10. Computerprogramm, das Maschinencode (10) umfasst, der von einer Ermittlungseinrichtung (8) abarbeitbar ist, wobei die Abarbeitung des Maschinencodes (10) durch die Ermittlungseinrichtung (8) bewirkt, dass die Ermittlungseinrichtung (8) ein Ermittlungsverfahren nach einem der obigen Ansprüche ausführt.

11. Ermittlungseinrichtung, wobei die Ermittlungseinrichtung mit einem Computerprogramm (9) nach Anspruch 10 programmiert ist, so dass die Ermittlungseinrichtung im Betrieb ein Ermittlungsverfahren nach einem der Ansprüche 1 bis 9 ausführt.

12. Kombination einer Ermittlungseinrichtung (8) nach Anspruch 11 mit einer Steuereinrichtung (5, 7),
- wobei die Ermittlungseinrichtung (8) und die Steuereinrichtung (5, 7) datentechnisch miteinander verbunden sind, so dass die Ermittlungseinrichtung (8) die von ihr ermittelten Anstellungen (A) des Walzgerüsts (4, 6) an die Steuereinrichtung (5, 7) übermittelt,
- wobei die Steuereinrichtung (5, 7) das Walzgerüst (4, 6) beim Walzen der jeweiligen Bramme (2) steuert,
- wobei die Steuereinrichtung (5, 7) die ihr übermittelten Anstellungen (A) des Walzgerüsts (4, 6) beim Walzen der Brammen (2) berücksichtigt.

13. Walzanlage zum Walzen von Brammen (2), wobei die Walzanlage mindestens einen Ofen (1) aufweist, den die Brammen (2) in einer Förderrichtung (y) durchlaufen und mittels dessen die Brammen (2) auf eine Endtemperatur aufheizbar sind, wobei der Ofen (1) derart dimensioniert ist, dass sich in Förderrichtung (y) gesehen gleichzeitig mehrere Brammen (2) im Ofen (1) befinden, wobei die Walzanlage weiterhin mindestens ein Walzgerüst (4, 6) aufweist, dem die Brammen (2) zum Walzen zugeführt werden, wobei die Walzanlage eine Kombination nach Anspruch 12 aufweist, wobei das mindestens eine Walzgerüst (4, 6) von der Steuereinrichtung (5, 7) der Kombination gesteuert wird.

## Claims

1. Method for determining an adjustment (A) of at least one roller stand (4, 6) when slabs (2) are being rolled in at least one rolling pass, wherein the slabs (2) pass through a furnace (1) in a conveying direction (y) such that there is a respective plurality of slabs (2) in the furnace (1), wherein the slabs (2) are heated to a final temperature while passing through the furnace (1), **characterized in that**
- a determining device (8) receives information (II, 12, 13) showing the regions occupied by the slabs (2) relative to one another when passing through the furnace (1) in at least one direction (x, z) orthogonal to the conveying direction (y),
- wherein the determining device (8) uses the information (II, 12, 13) it has received to determine, for at least one rolling pass of the respective slab (2), the adjustment (A) of the roller stand (4, 6) performing this rolling pass without prior determination of a respective temperature distribution of a respective slab (2) or without utilization of a determined temperature of a respective slab (2),
- wherein the determining device (8), when determining the adjustment (A) for the respective slab (2), takes into account the region occupied by the respective preceding slab (2), seen in the conveying direction (y), relative to the respective slab (2) and/or the region occupied by the respective following slab (2), seen in the conveying direction (y), relative to the respective slab (2),
- wherein the determining device (8) supplies the respective determined adjustment (A) of the roller stand (4, 6) to a control device (5, 7), which controls the roller stand (4, 6) when the respective slab (2) is being rolled, taking into account the respective adjustment (A).

2. Determination method according to Claim 1,
**characterized**
**in that** the determining device (8) additionally receives information (pi) showing the spacing (a, a') between slabs (2) which are adjacent in the conveying direction (y) when passing through the furnace (1) in the conveying direction (y), and in that the determining device (8) takes into account the spacing (a, a') between the slabs (2) which are adjacent in the conveying direction (y) when determining the adjustment (A) of the roller stand (4, 6) performing this rolling pass.

3. Determination method according to Claim 1 or 2, **characterized**
**in that** the respective adjustment (A) is spatially resolved in the width direction of the respective slab (2).

4. Determination method according to Claim 1, 2 or 3, **characterized**
**in that** the determining device (8) determines the adjustment (A) of the roller stand (4, 6) as a function over the location in the longitudinal direction of the respective slab (2) or as a function of time.

5. Determination method according to one of the preceding claims,
**characterized**
**in that** the determining device (8) receives further parameters (P) which describe the slabs (2) as such, and in that the determining device (8) takes into account the further parameters (P) when determining the adjustment (A) of the roller stand (4, 6) performing this rolling pass.

6. Determination method according to one of the preceding claims,
**characterized**
**in that** the determining device (8) receives a furnace temperature (T) and/or a dwell time (Δt) of the slabs (2) in the furnace (1) and in that the determining device (8) takes into account the furnace temperature (T) and/or the dwell time (Δt) of the slabs (2) when determining the adjustment (A) of the roller stand (4, 6) performing this rolling pass.

7. Determination method according to one of Claims 1 to 6, **characterized**
**in that** the determining device (8) receives charging data (B1) of the furnace (1), which describe the charging of the furnace (1) with the slabs (2), and in that the determining device (8) takes into account the charging data (B1) of the furnace (1) when determining the adjustment (A) of the roller stand (4, 6) performing this rolling pass.

8. Determination method according to one of Claims 1 to 6, **characterized**
**in that** the determining device (8) receives sensor-detected data (D) which are characteristic of the regions occupied by each of the slabs (2) in the furnace (1).

9. Determination method according to one of the preceding claims,
**characterized**
**in that** the determining device (8) determines the adjustment (A) of the roller stand (4, 6) by means of a multi-dimensional linear regression, by means of a non-linear approximation through multi-dimensional polynomials or splines, or by means of a neural network.

10. Computer program comprising machine code (10) which can be executed by a determining device (8), wherein the execution of the machine code (10) by the determining device (8) has the effect that the determining device (8) carries out a determination method according to one of the preceding claims.

11. Determining device, wherein the determining device is programmed with a computer program (9) according to Claim 10, such that the determining device carries out a determination method according to one of Claims 1 to 9 during operation.

12. Combination of a determining device (8) according to Claim 11 with a control device (5, 7),
- wherein the determining device (8) and the control device (5, 7) are connected to one another in terms of data technology, such that the determining device (8) transmits the adjustments (A) of the roller stand (4, 6) that it has determined to the control device (5, 7),
- wherein the control device (5, 7) controls the roller stand (4, 6) when the respective slab (2) is being rolled,
- wherein, when the slabs (2) are being rolled, the control device (5, 7) takes into account the adjustments (A) of the roller stand (4, 6) that are transmitted to it.

13. Rolling plant for rolling slabs (2), wherein the rolling plant has at least one furnace (1), through which the slabs (2) pass in a conveying direction (y) and by means of which the slabs (2) can be heated to a final temperature, wherein the furnace (1) is dimensioned in such a way that, as viewed in the conveying direction (y), a plurality of slabs (2) are in the furnace (1) at the same time, wherein the rolling plant furthermore has at least one roller stand (4, 6), to which the slabs (2) are fed for the purpose of rolling, wherein the rolling plant has a combination according to Claim 12, wherein the at least one roller stand (4, 6) is controlled by the control device (5, 7) of the combination.

## Revendications

1. Procédé de détermination pour un ajustement (A) d'au moins une cage de laminoir (4, 6) lors du laminage de brames (2) dans au moins une passe de laminage, dans lequel les brames (2) traversent un four (1) dans une direction de transport (y), de telle sorte que respectivement plusieurs brames (2) se trouvent dans le four (1), dans lequel les brames (2) sont chauffées pendant la traversée du four (1) à une température finale, **caractérisé en ce que**
- un dispositif de détermination (8) reçoit des informations (I1, I2, I3), à partir desquelles il ressort quelles zones les brames (2) occupent les unes par rapport aux autres lors de la traversée du four (1) dans au moins une direction (x, z) orthogonale à la direction de transport (y),
- dans lequel le dispositif de détermination (8) détermine à l'aide des informations (I1, I2, I3) reçues par lui, sans détermination préalable d'une distribution de température respective d'une brame (2) respective ou sans utilisation d'une température déterminée d'une brame (2) respective pour au moins une passe de laminage de la brame (2) respective, l'ajustement (A) de la cage de laminoir (4, 6) exécutant cette passe de laminage,
- dans lequel le dispositif de détermination (8), lors de la détermination de l'ajustement (A) pour la brame (2) respective, prend en compte la zone occupée par la brame (2) respectivement précédente dans la direction de transport (y) par rapport à la brame (2) respective et/ou la zone occupée par la brame (2) respectivement suivante dans la direction de transport (y) par rapport à la brame (2) respective,
- dans lequel le dispositif de détermination (8) fournit l'ajustement (A) déterminé respectif de la cage de laminoir (4, 6) à un dispositif de commande (5, 7), lequel commande la cage de laminoir (4, 6) lors du laminage de la brame (2) respective avec prise en compte de l'ajustement (A) respectif.

2. Procédé de détermination selon la revendication 1, **caractérisé en ce que** le dispositif de détermination (8) reçoit en outre des informations (pi), à partir desquelles il ressort quelle distance (a, a') sépare l'une de l'autre des brames (2) voisines dans la direction de transport (y) lors de la traversée du four (1) dans la direction de transport (y), et **en ce que** le dispositif de détermination (8) prend en compte la distance (a, a') des brames (2) voisines dans la direction de transport (y) lors de la détermination de l'ajustement (A) de la cage de laminoir (4, 6) exécutant cette passe de laminage.

3. Procédé de détermination selon la revendication 1 ou la revendication 2, **caractérisé en ce que** l'ajustement (A) respectif est résolu spatialement dans la direction de la largeur de la brame (2) respective.

4. Procédé de détermination selon la revendication 1, la revendication 2 ou la revendication 3, **caractérisé en ce que** le dispositif de détermination (8) détermine l'ajustement (A) de la cage de laminoir (4, 6) en tant que fonction de l'emplacement dans la direction longitudinale de la brame (2) respective ou en tant que fonction du temps.

5. Procédé de détermination selon l'une des revendications précédentes, **caractérisé en ce que** le dispositif de détermination (8) reçoit d'autres paramètres (P), lesquels décrivent les brames (2) en tant que telles, et **en ce que** le dispositif de détermination (8) prend en compte les autres paramètres (P) lors de la détermination de l'ajustement (A) de la cage de laminoir (4, 6) exécutant cette passe de laminage.

6. Procédé de détermination selon l'une des revendications précédentes, **caractérisé en ce que** le dispositif de détermination (8) reçoit une température de four (T) et/ou une durée de séjour (Δt) des brames (2) dans le four (1) et **en ce que** le dispositif de détermination (8) prend en compte la température de four (T) et/ou la durée de séjour (Δt) des brames (2) lors de la détermination de l'ajustement (A) de la cage de laminoir (4, 6) exécutant cette passe de laminage.

7. Procédé de détermination selon l'une des revendications 1 à 6, **caractérisé en ce que** le dispositif de détermination (8) reçoit des données de chargement (B1) du four (1), lesquelles décrivent le chargement du four (1) avec les brames (2), et **en ce que** le dispositif de détermination (8) prend en compte les données de chargement (B1) du four (1) lors de la détermination de l'ajustement (A) de la cage de laminoir (4, 6) exécutant cette passe de laminage.

8. Procédé de détermination selon l'une des revendications 1 à 6, **caractérisé en ce que** le dispositif de détermination (8) reçoit des données (D) détectées par des capteurs, lesquelles sont caractéristiques des zones qu'occupent respectivement les brames (2) dans le four (1).

9. Procédé de détermination selon l'une des revendications précédentes, **caractérisé en ce que** le dispositif de détermination (8) détermine l'ajustement (A) de la cage de laminoir (4, 6) au moyen d'une régression linéaire multidimensionnelle, au moyen d'une approximation non linéaire par l'intermédiaire de polynômes ou splines multidimensionnels ou au moyen d'un réseau neuronal.

10. Programme informatique, qui comporte un code machine (10), lequel est traitable par un dispositif de détermination (8), dans lequel le traitement du code machine (10) s'effectue par l'intermédiaire du dispositif de détermination (8) par le fait que le dispositif de détermination (8) exécute un procédé de détermination selon l'une des revendications précédentes.

11. Dispositif de détermination, le dispositif de détermination étant programmé avec un programme informatique (9) selon la revendication 10 de telle sorte que le dispositif de détermination, en fonctionnement, exécute un procédé de détermination selon l'une des revendications 1 à 9.

12. Combinaison d'un dispositif de détermination (8) selon la revendication 11 avec un dispositif de commande (5, 7),
- dans laquelle le dispositif de détermination (8) et le dispositif de commande (5, 7) sont reliés informatiquement l'un à l'autre de telle sorte que le dispositif de détermination (8) transmette les ajustements (A) de la cage de laminoir (4, 6) déterminés par lui au dispositif de commande (5, 7),
- dans laquelle le dispositif de commande (5, 7) commande la cage de laminoir (4, 6) lors du laminage de la brame (2) respective,
- dans laquelle le dispositif de commande (5, 7) prend en compte les ajustements (A) de la cage de laminoir (4, 6) qui lui sont transmis lors du laminage des brames (2).

13. Installation de laminage pour le laminage de brames (2), l'installation de laminage comprenant au moins un four (1), que les brames (2) traversent dans une direction de transport (y) et au moyen duquel les brames (2) sont chauffables à une température finale, dans laquelle le four (1) est dimensionné de telle sorte que, vues dans la direction de transport (y), plusieurs brames (2) se trouvent en même temps dans le four (1), l'installation de laminage comprenant de plus au moins une cage de laminoir (4, 6) dans laquelle les brames (2) sont introduites pour le laminage, l'installation de laminage comprenant une combinaison selon la revendication 12, dans laquelle l'au moins une cage de laminoir (4, 6) est commandée par le dispositif de commande (5, 7) de la combinaison.
